## Europäisches Patentamt

## European Patent Office

## Office européen des brevets

(19)

(11) Veröffentlichungsnummer: **0 103 845**
**B1**

(12) **EUROPÄISCHE PATENTSCHRIFT**

(45) Veröffentlichungstag der Patentschrift:
20.04.88

(21) Anmeldenummer: 83109047.7

(22) Anmeldetag: 14.09.83

(51) Int. Cl.⁴: **B 01 J 31/40**, B 01 J 31/28,
C 07 C 45/50

(54) Verfahren zur Rückgewinnung von wasserlöslichen, Rhodium enthaltenden Hydroformylierungskatalysatoren.

(30) Priorität: 22.09.82 DE 3235029

(43) Veröffentlichungstag der Anmeldung:
28.03.84 Patentblatt 84/13

(45) Bekanntmachung des Hinweises auf die Patenterteilung:
20.04.88 Patentblatt 88/16

(84) Benannte Vertragsstaaten:
AT BE DE FR GB IT LU NL SE

(56) Entgegenhaltungen:
EP - A - 0 019 296
EP - A - 0 041 134
WO - A - 82/01829
DE - A - 2 911 193
US - A - 3 857 895
US - A - 3 960 549
US - A - 4 248 802
US - A - 4 292 196

(73) Patentinhaber: Ruhrchemie Aktiengesellschaft,
Bruchstrasse 219, D-4200 Oberhausen 13 (DE)

(72) Erfinder: Gärtner, Roderich, Dr. Dipl.-Chem.,
Kirchstrasse 171, D-4220 Dinslaken (DE)
Erfinder: Cornils, Boy, Dr. Dipl.-Chem.,
Friedrich-Ebert-Strasse 45, D-4220 Dinslaken (DE)
Erfinder: Bexten, Ludger, Dr. Dipl.-Chem., Im Freihof 9,
D-4224 Hünxe (DE)
Erfinder: Kupies, Dieter, Burgfeld 143,
D-4100 Duisburg 14 (DE)

(74) Vertreter: Reichelt, Karl-Heinz, Dr., Ruhrchemie
Aktiengesellschaft Abt. PLD Postfach 13 01 60,
D-4200 Oberhausen 11 (DE)

**Beschreibung**

Die vorliegende Erfindung betrifft die Rückgewinnung von Hydroformylierungskatalysatoren auf Basis komplexer Rhodiumverbindungen aus ihren Lösungen in Wasser.

Die Verwendung von Wasser als Reaktionsmedium bei der Hydroformylierung von Olefinen mit Synthesegas bietet den Vorteil, die wasserunlöslichen Reaktionsprodukte durch einfache Phasentrennung aus dem Reaktionsgemisch entfernen zu können. Auf diese Weise verringert man die thermische Beanspruchung der wässrigen Katalysatorlösung, da ein Abstrippen der gebildeten Aldehyde entfällt. Deshalb lassen sich auf diesem Wege mit Erfolg auch höhere Olefine umsetzen, deren hochsiedende aldehydische Reaktionsprodukte beim Abstrippen zu einer thermischen Zersetzung des aktiven Hydroformylierungskatalysators führen würden.

Ein Hydroformylierungsverfahren, das mit Wasser als Reaktionsmedium arbeitet, ist in der DE-PS 2 627 354 beschrieben. Als Katalysatorsystem wird Rhodium in metallischer Form oder als Verbindung zusammen mit wasserlöslichen Phosphinen verwendet. Die Wasserlöslichkeit der Phosphine ist dabei auf die Anwesenheit von Sulfonsäuregruppen im Molekül zurückzuführen. Die Phosphine gelangen bevorzugt in Form der Alkali-, Ammonium- oder Erdalkalisulfonate zum Einsatz.

Bei kontinuierlicher Verfahrensführung unterliegt die Katalysatorlösung einer Reihe von Einflüssen, die schliesslich eine Verringerung der Aktivität des Katalysatorsystems durch Vergiftung zur Folge haben. In diesem Zusammenhang sind als Katalysatorgifte beispielsweise Eisencarbonyl, das sich durch Einwirkung von Synthesegas auf die Synthesegastransportleitungen oder das Konstruktionsmaterial des Reaktors bildet, und höhersiedende Kondensationsprodukte, die aus den Aldehyden entstehen, zu nennen. Ferner werden die sulfonierten Phosphine zu den entsprechenden sulfonierten Phosphinoxiden oxidiert oder zu aromatischen Sulfonsäuren abgebaut. In gewissem Umfang bilden sich auch Phosphinsulfide aus den im Synthesegas enthaltenen schwefelhaltigen Verbindungen und durch Reduktion von Sulfonatgruppen.

Weder Phosphinoxide oder Phosphinsulfide noch aromatische Sulfonsäuren sind als Bestandteil des Hydroformylierungskatalysator geeignet.

Es ist daher erforderlich, die desaktivierte, wässrige Katalysatorlösung von Zeit zu Zeit durch frische Lösung zu ersetzen. Die gebrauchte Katalysatorlösung enthält das noch aktive sulfonierte Phosphin in Form der Alkalisalze sowie Rhodium, die zurückgewonnen werden müssen, um die Wirtschaftlichkeit des Verfahrens zu sichern.

Ein Verfahren zur Trennung aromatischer Sulfonsäuren von Schwefelsäure und Sulfaten, die gemeinsam in wässriger Lösung vorliegen, ist in der US-A-3 719 703 beschrieben. Es besteht in der Behandlung der wässrigen Lösung mit einem wasserunlöslichen aliphatischen Amin, in dem sich die Sulfonsäuren lösen, Trennen von Wasser- und Aminphase und abschliessender Extraktion der Sulfonsäuren aus dem Amin. Die zusätzliche Rückgewinnung eines Metalls, nämlich Rhodium, das in sehr geringer Konzentration vorliegt, und seine Abtrennung von einem zweiten Metall, Eisen, das überdies noch der gleichen Gruppe des Periodensystems angehört, ist in dieser Veröffentlichung nicht beschrieben.

Ein Verfahren zur Abtrennung wasserlöslicher Salze aromatischer Sulfonsäuren ist Gegenstand der EP-A-0 041 134. Das mit Wasser verdünnte Sulfiergemisch wird mit einer der Sulfonsäure äquivalenten Menge wasserunlöslichen Amins behandelt, das mit der Sulfonsäure ein lipophiles Salz bildet. Darauf trennt man die entstehenden zwei Phasen und behandelt die das Ammoniumsalz enthaltende Phase mit der stöchiometrischen Menge einer wasserlöslichen Base, deren sulfonsaures Salz hergestellt werden soll. Man erhält das sulfonsaure Salz in wässriger Lösung, aus der es isoliert werden kann. Das Verfahren setzt voraus, dass das Ammonsalz unterhalb der Siedetemperatur der wässrigen Schwefelsäure flüssig ist.

In der DE-PS 2 911 193 ist ein Verfahren zur Rückgewinnung von Rhodium aus Rückständen der Oxo-Synthese beschrieben. Hierbei wird das Rhodium durch Zusatz von elementarem Schwefel oder schwefelabspaltenden Verbindungen ausgefällt und der Niederschlag in an sich bekannter Weise durch eine Pyrosulfatschmelze über Rhodiumsulfat zu Rhodium oder Rhodiumverbindungen aufgearbeitet. Dieses Verfahren eignet sich besonders zur Aufarbeitung von Rückständen, die neben Rhodium noch freies Triphenylphosphin enthalten.

Als Nachteil erweist sich dabei, dass das Rhodium nicht in Form eines unmittelbar als Hydroformylierungskatalysator wiedereinsetzbaren Produktes gewonnen wird, sondern erst entsprechend umgearbeitet werden muss. Eine Rückgewinnung des Phosphinliganden ist bei Anwendung dieses Verfahrens nicht möglich.

Es bestand daher die Aufgabe ein Verfahren zu entwickeln, das die Rückgewinnung des wasserlöslichen Rhodium und Phosphin enthaltenden Katalysatorsystems erlaubt.

Die vorstehende Aufgabe wird gelöst durch ein Verfahren zur Rückgewinnung von wasserlöslichem Rhodium und Phosphine und daneben noch Alkalimetall- und/oder Erdalkalimetall- und/oder Ammoniumionen enthaltenden Katalysatorsystemen, wobei man der wässrigen Lösung des Katalysatorsystems zunächst eine der vorhandenen Säuregruppen mindestens äquivalenten Menge Säure zusetzt, darauf mit einem Amin, das in einem organischen Lösungsmittel gelöst ist, extrahiert, die abgetrennte organische Phase mit der wässrigen Lösung einer anorganischen Base in innige Berührung bringt und schliesslich die wässrige Phase abtrennt.

Das erfindungsgemässe Verfahren stellt nicht nur sicher, dass Rhodium und auch die Phosphine nahezu quantitativ wiedergewonnen, sondern dass auch die Verunreinigungen, wie Eisen und andere Metallverbindungen, Halogenide, Phosphinoxide, -sulfide, aromatische Sulfonsäuren entfernt werden.

Im Rahmen des erfindungsgemässen Verfahrens können die gebrauchten, Verunreinigungen und inaktive Substanzen enthaltenden Katalysatoren ohne vorherige Zwischenaufbereitung in den Reinigungsprozess eingesetzt werden. Der Aufarbeitungsgang kann dabei wie folgt beschrieben werden:

Die zu reinigende, wässrige Katalysatorlösung wird zunächst angesäuert. Zu diesem Zweck versetzt man sie mit mindestens so vielen Säureäquivalenten, wie zur Umwandlung der als Salze vorliegenden Säurereste in die Säureform erforderlich sind. Ein Säureüberschuss ist nicht schädlich, aber entbehrlich. Die benötigte Säuremenge sollte zuvor analytisch bestimmt werden. Geeignet zur Umwandlung der Salze in die Säure sind alle Säuren, die aufgrund ihrer Säurestärke die sulfonsauren Salze soweit in die freien Sulfonsäuren überführen, dass diese unter den gewählten Reaktionsbedingungen extrahiert werden können, und die aufgrund ihres hydrophilen Charakters unter den gewählten Reaktionsbedingungen weniger gut extrahiert werden als die Sulfonsäuren.

In Betracht kommen sowohl anorganische als auch organische Säuren. Geeignet sind anorganische Säuren, wie Salzsäure, Schwefelsäure, Salpetersäure, Phosphorsäure und organische Säuren wie Essigsäure, Ameisensäure und Oxalsäure. Mit besonderem Erfolg werden Schwefelsäure und Essigsäure verwendet.

Bei Einsatz mehrwertiger Säuren bezieht man die zur Umsetzung der Katalysatorlösung erforderliche Säuremenge zweckmässig nur auf den Umsatz der ersten Säurestufe.

Nach einer besonderen Ausführungsform der erfindungsgemässen Arbeitsweise fügt man der Katalysatorlösung die benötigte Säuremenge in Form eines Aminsalzes zu. Geeignet sind die Salze derjenigen Amine, die auch als Extraktionsmittel verwendet werden. In diesem Fall bilden sich sofort die Aminsalze der Sulfonsäuren.

Nach der Ansäuerung der Katalysatorlösung werden im zweiten Arbeitsschritt Rhodium und die sulfonierten Phosphine mit Hilfe eines Amins extrahiert. Die als Extraktionsmittel verwendeten Amine sollen flüssig und möglichst wenig löslich in Wasser sein.

Das aus dem Amin und der Sulfonsäure entstehende Salz weist in der Regel eine geringe Löslichkeit in Wasser auf. Ist die Löslichkeit des entstehenden Salzes in Wasser grösser als im Extraktionsmittel, so ist das Amin zur Extraktion nur wenig geeignet.

Als weitgehend wasserunlösliche Amine, die mit der Sulfonsäure ein genügend lipophiles Salz bilden, kommen weitgehend wasserunlösliche homo- und heterocyclische aliphatische, aromatische, araliphatische und vorzugsweise offenkettige verzweigte oder unverzweigte aliphatische Amine mit insgesamt 10 bis 60, vorzugsweise 13 bis 36 Kohlenstoffatomen in Betracht, z.B. Isotridecylamin (Isomerengemisch), Di-2-ethylhexylamin, Tri-n-hexylamin, Tri-n-octylamin, Tri-iso-octylamin, Tri-iso-nonylamin(Isomerengemisch), Di-iso-nonyl-2-phenylpropylamin, Isononyl-di-2-phenylpropylamin, Tri-iso-tridecylamin (Isomerengemisch), N.N-dimethyl-hexadecylamin, N.N-dimethyl-octadecylamin. Insbesondere setzt man als Extraktionsmittel Isotridecylamin, Tri-n-octylamin oder Tri-iso-octylamin ein.

Die Amine können als solche als Extraktionsmittel eingesetzt werden. Vorteilhaft löst man sie jedoch in einem mit Wasser nicht oder nur wenig mischbaren organischen Lösungsmittel. Es wird in einer solchen Menge verwendet, dass das Amin in einer 0,5 bis 50 Vol.%igen Lösung vorliegt. Die Konzentration wird im wesentlichen durch die bei der Extraktion zu beachtende Löslichkeit der Aminsulfonsäuresalze im Lösungsmittel und durch die Viskosität der anfallenden Salzlösung begrenzt. Die Wahl eines geeigneten Verdünnungsmittels erfolgt also eher nach physikalischen als nach chemischen Aspekten. Das Verdünnungsmittel soll nach Möglichkeit folgenden Anforderungen genügen: es soll geringe Wasserlöslichkeit besitzen, sein Flammpunkt soll oberhalb 25 °C liegen, die Verdunstungsverluste sollen gering sein, es soll ferner keine Neigung zur Emulsionsbildung haben und nur wenig in die wässrige Phase mitgerissen werden. Darüber hinaus soll es inert, nicht toxisch und preisgünstig sein, gutes hydrodynamisches Verhalten zeigen und nur geringes Extraktionsvermögen für die in der Katalysatorlösung enthaltenen Verunreinigungen besitzen. Geeignete Lösungsmittel sind kerosinähnliche Fraktionen, Aromatenfraktionen, $C_4$–$C_{20}$-Alkohole, $C_8$–$C_{20}$-Ether, insbesondere Toluol oder kerosinähnliche Fraktionen. Mit ihrer Hilfe gelingt es, nicht nur anorganische Stoffe, wie Eisenverbindungen und Halogenide abzutrennen, sondern auch die katalytisch inaktiven Substanzen, wie Phosphinoxide, Phosphinsulfide und aromatische Sulfonsäuren.

Das Amin wird in einer Menge von 0,1 bis 1,0 Mol je Äquivalent Sulfonsäure und insbesondere von 0,25 bis 0,75 Mol je Äquivalent Sulfonsäure eingesetzt.

Nach einer besonders bewährten Ausführungsform der erfindungsgemässen Arbeitsweise erfolgt die Extraktion von Rhodium und den Phosphinen nicht in einem, sondern in mehreren Schritten, indem nicht die gesamte Aminmenge auf einmal, sondern in Anteilen der angesäuerten Katalysatorlösung zugesetzt wird. In der ersten Stufe setzt man der Lösung dann 0,25 bis 0,5 Mol Amin je Äquivalent Sulfonsäure zu, und in der zweiten Stufe weitere 0,25 bis 0,5 Mol, in einer weiteren dritten Stufe kann dann, falls erforderlich, das restliche Amin der angesäuerten Katalysatorlösung zugeführt werden. Bei dieser Variante des erfindungsgemässen Verfahrens werden mehr als 90% des in der Lösung vorhandenen Rhodiums bereits in der ersten Stufe abgetrennt. In diesem Zusammenhang ist es auch möglich, in den einzelnen Stufen verschiedene Amine einzusetzen,

um die Bestandteile der Lösung selektiver zu extrahieren.

Bei der Extraktion werden das gesamte Rhodium und das wasserlösliche Phosphin in die Aminphase überführt. Die angesäuerte wässrige Phase enthält nur noch die wasserlöslichen anorganischen und organischen Verunreinigungen und kann verworfen werden.

Zur Rückgewinnung des jetzt in der organischen Aminphase enthaltenen Rhodiums und der Phosphine wird in einem dritten Arbeitsschritt die Aminphase mit der wässrigen Lösung einer anorganischen Base in innige Berührung gebracht. Als anorganische Basen verwendet man Natriumhydroxid, Kaliumhydroxid, Natriumcarbonat, Kaliumcarbonat und Erdalkalihydroxide, insbesondere Natriumhydroxid und Kaliumhydroxid. Die Base gelangt als 0,1 bis 10 Gew.-%ige Lösung zum Einsatz und wird, bezogen auf das vorhandene Amin, in stöchiometrischer Menge oder in geringem Überschuss verwendet. Bei dieser Behandlung wandern Rhodium und die Phosphine wieder in die wässrige Phase, und es entsteht eine wässrige Lösung, die unmittelbar – oder nach entsprechender Verdünnung bzw. Ergänzung – wieder als Katalysatorlösung eingesetzt werden kann.

Die Extraktion mit einer Aminlösung und die Reextraktion mit einer wässrigen Lauge kann in bekannter Weise z.B. in einer kontinuierlich arbeitenden Gegenstromextraktionsanlage durchgeführt werden.

In der Praxis führt man das erfindungsgemässe Verfahren in der Weise durch, dass man die ausgebrauchte, wässrige Katalysatorlösung mit der erforderlichen Menge Säure ansäuert. Anschliessend fügt man das, gegebenenfalls in einem Lösungsmittel gelöste, Amin hinzu. Durch intensives Mischen der beiden praktisch ineinander unlöslichen Phasen wird sichergestellt, dass sowohl das Rhodium als auch die Phosphine weitgehend in die Aminphase übergehen. Man lässt die beiden Phasen absitzen und trennt die obere organische von der unteren wässrigen Phase ab. Anschliessend wird die organische Phase mit der wässrigen Lösung einer anorganischen Base behandelt. Auch hierbei ist es wichtig, dass die miteinander nicht mischbaren Phasen in möglichst innige Berührung kommen, so dass Rhodium und die Phosphine weitgehend aus der organischen Phase in die wässrige Phase übertreten. Die wässrige Phase wird darauf abgetrennt und kann unmittelbar als Katalysatorlösung in der Synthese Verwendung finden.

Beispiel I

100 g einer gebrauchten Katalysatorlösung, die je kg Lösung

0,155 g Rhodium

0,160 g Eisen

9,0 g Na-Triphenylphosphin-trisulfonat (TPPTS)

22,0 g Na-Triphenylphosphinoxid-trisulfonat (TPPOTS)

2,0 g Na-Triphenylphosphinsulfid-trisulfonat (TPPSTS)

4,0 g Na-Triphenylphosphinoxid-disulfonat (TPPODS)

enthält, werden in einem Schütteltrichter 30 Min. mit 17,04 g Extraktionsmittel in 82,96 g Toluol behandelt. Das Extraktionsmittel wird durch Lösen von 100 g Triisooctylamin und 30 g Schwefelsäure in 900 g Toluol erhalten. Die als Extraktionsmittel eingesetzte Aminmenge entspricht 0,25 Mol Amin je Val. Sulfonat. Nach Abtrennen der Toluolphase wird die Extraktion weitere fünfmal mit derselben Extraktionsmittel- und Toluolmenge wiederholt.

In einem mit Bodenablassventil versehenen Dreihalskolben werden die organischen Phasen getrennt unter intensivem Rühren solange mit 0,1 n wässriger NaOH-Lösung versetzt, bis ein pH-Wert von 8 erreicht ist. Die, das gesamte Katalysatorsystem enthaltenden wässrigen Phasen werden anschliessend von den organischen Phasen getrennt und können ggf. nach Verdünnen mit Wasser wieder in der Synthese eingesetzt werden.

Beispiel II

100 g der gebrauchten Katalysatorlösung des Beispiels I werden mit 39,3 g 10%iger Schwefelsäure angesäuert und darauf sechsmal mit jeweils 16,54 g Extraktionsmittel (erhalten aus 100 g Triisooctylamin und 900 g Toluol) gelöst in jeweils 60 g Toluol extrahiert. Die Weiterbehandlung der abgetrennten organischen Phasen erfolgt wie in Beispiel I.

Beispiel III

100 g der gebrauchten Katalysatorlösung des Beispiels I werden mit 49,2 g 40%iger Schwefelsäure versetzt. Die angesäuerte Lösung wird wie in Beispiel II weiterbehandelt.

Beispiel IV

100 g der gebrauchten Katalysatorlösung des Beispiels I werden mit 20,2 g 10%iger Schwefelsäure versetzt. Die angesäuerte Lösung wird sechsmal mit jeweils 16,54 g Extraktionsmittel (erhalten aus 100 g Tri-n-octylamin und 900 g Toluol) gelöst in jeweils 60 g Toluol extrahiert. Die Weiterbehandlung der organischen Phasen erfolgt wie in Beispiel I.

Beispiel V

100 g der gebrauchten Katalysatorlösung des Beispiels I wird mit 20,2 g 10%iger Schwefelsäure angesäuert und darauf sechsmal mit jeweils 16,54 g Extraktionsmittel (erhalten aus 38,1 g Tri-n-hexylamin und 461,9 g Toluol) gelöst in jeweils 60 g Toluol extrahiert. Die als Extraktionsmittel eingesetzte Aminmenge entspricht 0,25 Mol Amin je Val Sulfonat.

Ansonsten wird wie im Beispiel I verfahren.

Beispiel VI

100 g der gebrauchten Katalysatorlösung des Beispiels I werden mit 20,2 g 10%iger Schwefelsäure angesäuert und darauf sechsmal mit je-

Tabelle 1: Beispiele I–VII

| Beispiele | I | | II | | III | | IV | | V | | VI | VII | |
|---|---|---|---|---|---|---|---|---|---|---|---|---|---|
| Amin im Extraktionsmittel | Tri-isooctylamin | | | | | | Tri-n-octylamin | | Tri-n-hexylamin | | Tri-n-butylamin | Di-2-ethyl-hexylamin | |
| zugesetzte $H_2SO_4$ (Mol) | $6 \times 0,27^*$ | | 2 | | 10 | | 1,1 | | 1,1 | | 1,1 | 1,1 | |
| –$SO_3H$ in Lsg. (Mol) | 1 | | 1 | | 1 | | 1 | | 1 | | 1 | 1 | |
| Rh und Fe in Lsg.** | | | | | 155 Rh | | 160 Fe | | | | | | |
| (mg/kg) | Rh | Fe | Rh | Fe | Rh | Fe | Rh | Fe | Rh | | Rh | Rh | Fe |
| 1. Reextrakt*** | 64,6 | 1,4 | 105,3 | 1,9 | 103,9 | 2,1 | 92,9 | 2,2 | 95,5 | 2,9 | | 85,6 | 2,2 |
| 2. Reextrakt | 62,0 | 1,8 | 27,2 | 3,5 | 26,9 | 2,3 | 33,7 | 2,0 | 25,4 | 3,5 | | 53,3 | 4,5 |
| 3. Reextrakt | 6,7 | 2,0 | 6,1 | 2,5 | 3,0 | 2,1 | 6,6 | 3,1 | 10,7 | 2,5 | | 6,9 | 3,1 |
| 4. Reextrakt | 6,0 | 1,5 | 5,9 | 2,1 | 3,0 | 2,3 | 6,7 | 2,3 | 8,6 | 4,2 | | 2,8 | 2,5 |
| 5. Reextrakt | 8,4 | 1,7 | 5,5 | 1,6 | 2,5 | 4,1 | 9,6 | 3,6 | 7,8 | 1,3 | | 2,2 | 2,1 |
| 6. Reextrakt | 2,6 | 1,3 | 1,2 | 1,4 | 1,3 | 1,2 | 2,1 | 2,5 | 3,4 | 2,5 | | 1,8 | 2,9 |
| Rh und Fe in Lsg. | (93,2 g) | | (128,4 g) | | (138,8 g) | | (109,6 g) | | (108,4 g) | | (120,4 g) | (108,0 g) | |
| nach Extraktion (mg/kg) | 4,2 | 150 | 1,5 | 113 | 5,1 | 102 | 1,2 | 130 | 1,1 | 131 | 126 | 1,0 | 142 |
| Rh in organ. Phase | <0,5 | | <0,5 | | <0,5 | | <0,5 | | <0,5 | | <0,5 | <0,5 | |

\* als Aminsalz
\*\* Lsg. = gebrauchte Katalysatorlösung
\*\*\* Reextrakt: aus organischer Phase wiedergewonnenes Rhodiumsalz in wässriger Lösung, aufgefüllt auf 100 g

weils 16,54 g Extraktionsmittel (erhalten aus 52,4 g Tri-n-butylamin und 947,6 g Toluol) gelöst in jeweils 60 g Toluol extrahiert. Die als Extraktionsmittel eingesetzte Aminmenge entspricht 0,25 Mol Amin je Val Sulfonat. Ansonsten wird wie im Beispiel I verfahren.

Überraschenderweise wird mit dem eingesetzten Extraktionsmittel kein Rhodium aus der wässrigen Lösung des Katalysatorsystems extrahiert.

Beispiel VII

100 g der gebrauchten Katalysatorlösung des Beispiels I mit 20,2 g 10%iger Schwefelsäure angesäuert und darauf sechsmal mit jeweils 16,54 g Extraktionsmittel (erhalten aus 34,14 g Di-2-ethylhexylamin und 465,86 g Toluol) gelöst in jeweils 60 g Toluol extrahiert. Die als Extraktionsmittel eingesetzte Aminmenge entspricht 0,25 Mol je Val Sulfonat. Ansonsten wird wie in Beispiel I verfahren.

Die Ergebnisse der Beispiele I bis VII sind in Tabelle 1 zusammengestellt. Sie zeigen, dass das Verhältnis von zugesetzter Säure zu vorhandenen Sulfonatgruppen den Extraktionseffekt wenig beeinflusst (I bis III), dass aber zwischen den Aminen Unterschiede bestehen (IV, V, VII gegenüber VI). Rhodium wird durch hinreichend hydrophobe Amine, d.h. Amine, die stärker hydrophob sind als Tri-n-butylamin, quantitativ und in hoher Selektivität aus gebrauchten wässrigen Katalysatorlösungen extrahiert.

Beispiel VIII

100 g der gebrauchten Katalysatorlösung des Beispiels I werden mit 20,2 g 10%iger Schwefelsäure versetzt.

Als Extraktionsmittel wird eine Lösung von 61,88 g Isotridecylamin in 438,12 g Toluol verwendet.

Die mit Schwefelsäure angesäuerte Katalysatorlösung wird in 3 aufeinanderfolgenden Extraktionsschritten mit 7,54 g Extraktionsmittel und 70 g Toluol (entspr. 0,25 Mol Amin/Val Sulfonat) = 1. Reextrakt darauf mit 7,54 g Extraktionsmittel und 70 g Toluol (entspr. 0,25 Mol Amin/Val Sulfonat) = 2. Reextrakt und schliesslich mit 15,08 g Extraktionsmittel und 70 g Toluol (entspr. 0,50 Mol Amin/Val Sulfonat) = 3. Reextrakt extrahiert.

Das aus Rhodium und Phosphin bestehende Katalysatorsystem wird aus den Toluollösungen durch Zugabe von soviel 1 n Natronlauge, dass der pH-Wert 12,0 eingestellt wird, reextrahiert. Die Ergebnisse sind in Tabelle 2 aufgeführt.

Wie ersichtlich kann Rhodium durch partielle Aminextraktion weitgehend von TPPOTS abgetrennt werden. Gleichzeitig wird TTPPTS nahezu vollständig wiedergewonnen.

Tabelle 2: Beispiel VIII

| | Rh (mg/kg) | Fe (mg/kg) | TPP TS (%) | TPP OTS (%) | TPP STS (%) | TPP ODS (%) |
|---|---|---|---|---|---|---|
| Gehalt der Katalysatorlösung | 155 | 160 | 0,9 | 2,2 | 0,2 | 0,4 |
| mit 25% (d.Th.) Amin extrahiert 1. Reextrakt* | 83,9 | 6,5 | 0,60 | 0,11 | | 0,08 |
| mit 25% (d.Th.) Amin extrahiert 2. Reextrakt* | 56,4 | 10,5 | 0,25 | 0,24 | | 0,12 |
| mit 50% (d.Th.) Amin extrahiert 3. Reextrakt* | 6,7 | 22,3 | 0,05 | 0,65 | 0,10 | 0,18 |
| Katalysatorlösung nach Extraktion (114,6 g) | 2,4 | 104 | | 1,18 | 0,10 | <0,05 |
| vereinigte Toluollösungen 1–3 nach Reextraktion | 1,5 | 2,1 | | | | |

* aufgefüllt auf 100 g

Beispiele IX–XXVI

Eine gebrauchte Katalysatorlösung enthält je kg 345 mg Rh, 270 mg Fe, 19,2 g Na₃-Triphenylphosphintrisulfonat, 38,0 g Na₃-Triphenylphosphinoxidtrisulfonat, 0,7 g Na₃-Triphenylphosphinsulfidtrisulfonat, 2,0 g Na₂-Triphenylphosphindisulfonat, und 7,7 g Triphenylphosphinoxiddisulfonat.

Drei 100 g-Proben Katalysatorlösung werden mit jeweils 6 g konz. Schwefelsäure versetzt. Die eine Probe wird mit 13,83 g Triisooctylamin, die andere mit 9,44 g Di-2-ethylhexylamin und die Dritte mit 7,80 g Isotridecylamin und jeweils 100 ml des in Tabelle 3 aufgeführten Lösungsmittels extrahiert, entsprechend 1,0 Mol Amin je 1 Val Sulfonat.

Aus den organischen Phasen wird das Katalysatorsystem durch Zugabe von 1 n Natronlauge bis zum Erreichen des pH-Wertes 8,0 bzw. 12,0 (Isotridecylamin) reextrahiert.

Sämtliche Versuche werden in Stickstoffatmosphäre ausgeführt, die eingesetzten Lösungsmittel waren zuvor unter N₂-Schutz bis zum Siedepunkt erhitzt worden.

Bei der Verwendung eines Gemisches aliphatischer Kohlenwasserstoffe (Siedebereich 140–170 °C) oder von Cyclohexan oder Diethylether als Lösungsmittel werden zwei getrennte organische Phasen erhalten, die leichtere, dünnflüssige Phase ist weitgehend Rhodium-frei, die schwerere, zähflüssigere Phase enthält den Hauptanteil des Rhodiums. Beide Phasen werden gemeinsam zur Reextraktion eingesetzt.

Die Ergebnisse der Versuche sind in Tabelle 3 zusammengestellt. Sie zeigen, dass die verschiedensten inerten Lösungsmittel als Verdünnungsmittel für das Amin eingesetzt werden können. Die Angaben gelten für 100 g Reextrakt und 100 g Abwasser.

Tabelle 3: Beispiele IX–XXVI

| | | Rh mg/kg | TPP TS % | TPP OTS % | TPP STS % | TPP DS % | TPP ODS % |
|---|---|---|---|---|---|---|---|
| Gehalt der Katalysatorlösung | | 345 | 1,92 | 3,80 | 0,07 | 0,20 | 0,77 |
| **a) Triisooctylamin** | | | | | | | |
| n-Butanol | Reextrakt | 289 | 1,90 | 2,85 | | 0,18 | 0,71 |
| | Abwasser* | 52 | <0,05 | 0,88 | 0,05 | | 0,05 |
| 2-Ethylhexanol | Reextrakt | 220 | 1,90 | 1,20 | | 0,18 | 0,65 |
| | Abwasser | 123 | <0,05 | 2,52 | 0,05 | | 0,09 |
| Toluol | Reextrakt | 281 | 1,75 | 1,41 | | 0,16 | 0,65 |
| | Abwasser | 63 | 0,12 | 2,35 | 0,05 | | 0,09 |
| Kohlenwasserstoffgemisch | Reextrakt | 282 | 1,58 | 1,98 | | 0,14 | 0,64 |
| (Siedebereich 140–170 °C) | Abwasser | 54 | 0,31 | 1,80 | 0,05 | | 0,11 |
| Cyclohexan | Reextrakt | 284 | 1,62 | 1,98 | | 0,13 | 0,63 |
| | Abwasser | 62 | 0,27 | 2,27 | 0,05 | | 0,11 |
| Diethylether | Reextrakt | 260 | 1,45 | 1,55 | | 0,13 | 0,33 |
| | Abwasser | 77 | 0,42 | 2,23 | 0,05 | | 0,47 |
| **b) Di-2-ethylhexylamin** | | | | | | | |
| n-Butanol | Reextrakt | 301 | 1,87 | 3,12 | | 0,19 | 0,72 |
| | Abwasser | 36 | <0,05 | 0,64 | 0,05 | | 0,05 |
| 2-Ethylhexanol | Reextrakt | 244 | 1,82 | 1,45 | | 0,19 | 0,70 |
| | Abwasser | 96 | 0,07 | 2,31 | 0,05 | | 0,05 |
| Toluol | Reextrakt | 299 | 1,65 | 1,60 | | 0,17 | 0,65 |
| | Abwasser | 45 | 0,24 | 2,15 | 0,05 | | 0,09 |
| Kohlenwasserstoffgemisch | Reextrakt | 305 | 1,39 | 2,20 | | 0,12 | 0,68 |
| (Siedebereich 140–170 °C) | Abwasser | 35 | 0,49 | 1,54 | 0,05 | | 0,07 |
| Cyclohexan | Reextrakt | 315 | 1,40 | 1,77 | | 0,12 | 0,68 |
| | Abwasser | 24 | 0,50 | 1,93 | 0,05 | | 0,08 |
| Diethylether | Reextrakt | 291 | 1,46 | 1,59 | | 0,13 | 0,63 |
| | Abwasser | 51 | 0,43 | 2,20 | 0,05 | | 0,11 |
| **c) Isotridecylamin** | | | | | | | |
| n-Butanol | Reextrakt | 307 | 1,90 | 2,90 | | 0,18 | 0,69 |
| | Abwasser | 34 | <0,05 | 0,83 | 0,05 | | 0,05 |
| 2-Ethylhexanol | Reextrakt | 205 | 1,71 | 0,91 | | 0,19 | 0,65 |
| | Abwasser | 123 | 0,17 | 2,87 | 0,05 | | 0,10 |
| Toluol | Reextrakt | 278 | 1,65 | 1,42 | | 0,16 | 0,65 |
| | Abwasser | 63 | 0,24 | 2,33 | 0,05 | | 0,08 |
| Kohlenwasserstoffgemisch | Reextrakt | 281 | 1,13 | 1,42 | | 0,11 | 0,60 |
| (Siedebereich 140–170 °C) | Abwasser | 54 | 0,74 | 2,34 | 0,05 | | 0,14 |
| Cyclohexan | Reextrakt | 284 | 1,22 | 1,19 | | 0,13 | 0,49 |
| | Abwasser | 62 | 0,68 | 2,59 | 0,05 | | 0,15 |
| Diethylether | Reextrakt | 260 | 1,28 | 1,11 | | 0,13 | 0,49 |
| | Abwasser | 77 | 0,63 | 2,65 | 0,05 | | 0,16 |

\* Abwasser = Katalysatorlösung nach Extraktion

## Beispiele XXVII–XXVIII

Jeweils 100 g der gebrauchten Katalysatorlösung der Beispiele IX–XXVI werden mit 6 g konz. Schwefelsäure bzw. mit 3 g Essigsäure angesäuert und darauf mit jeweils 100 g Isotridecylamin/ Toluol-Lösung extrahiert. Die Reextraktion des Rhodiumkatalysators wird mit Natronlauge – Zusatz von Natronlauge bis zur Einstellung des pH-Wertes 12 – durchgeführt.

Die beiden Versuche, deren Ergebnisse in Tabelle 4 zusammengestellt sind, belegen, dass zum Ansäuern der gebrauchten Katalysatorlösung sowohl anorganische als auch organische Säuren verwendet werden können. Gleichzeitig ist zu erkennen, dass durch partielle Extraktion TPPOTS wesentlich besser abgetrennt wird.

Tabelle 4: Beispiele XXVII und XXVIII

| | Rh (mg/kg) | Fe (mg/kg) | TPP TS (%) | TPP OTS (%) | TPP STS (%) | TPP DS (%) | TPP ODS (%) |
|---|---|---|---|---|---|---|---|
| Gehalt der Katalysatorlösung | 345 | 270 | 1,92 | 3,80 | 0,07 | 0,20 | 0,77 |
| mit H$_2$SO$_4$ angesäuert a) mit 50% (d.Th.) Amin extrahiert 1. Reextrakt | 225 | 3,1 | 1,50 | 0,25 | | 0,18 | 0,31 |
| b) mit weiteren 50% (d.Th.) Amin extrahiert 2. Reextrakt | 114 | 5,8 | 0,39 | 1,13 | | | 0,29 |
| Gehalt der Katalysatorlösung nach Extraktion (91 g Lösung zurückerhalten) | 5,8 | 259 | | 2,76 | | | 0,12 |
| mit Essigsäure angesäuert mit 100% (d.Th.) Amin extrahiert Reextrakt | 315 | 39 | 1,90 | 0,65 | | 0,21 | 0,43 |
| Gehalt der Katalysatorlösung nach Extraktion (92 g Lösung zurückerhalten) | 27,6 | 249 | 0,09 | 3,14 | | | 0,34 |

Beispiel XXIX

100 g der Katalysatorlösung der Versuche IX–XXVIII werden mit 3 g Essigsäure angesäuert. Die Katalysatorlösung wird danach mit 100 g Triisooctylamin/Toluol-Lösung extrahiert. Die Reextraktion des Rhodiumkatalysators wird in bekannter Art mit Natronlauge durchgeführt.

Die Ergebnisse des Versuches sind in Tabelle 5 enthalten. Sie verdeutlichen nochmals die hohe Selektivität der Abtrennung von Rhodium und TPPTS von TPPOTS.

Tabelle 5: Beispiel XXIX

| | Rh (mg/kg) | Fe | TPP TS % | TPP OTS % | TPP STS % | TPP DS % | TPP ODS % |
|---|---|---|---|---|---|---|---|
| Gehalt der gebrauchten Katalysatorlösung | 345 | 270 | 1,92 | 3,80 | 0,07 | 0,20 | 0,77 |
| mit Essigsäure angesäuert mit 100% (d.Th.) Amin extrahiert Reextraktion | 170 | 16,5 | 1,67 | 0,1 | | 0,18 | 0,39 |
| Katalysatorlösung nach Extraktion, 95 g | 164 | 237 | 0,22 | 3,75 | | | 0,32 |

**Patentansprüche**

1. Verfahren zur Rückgewinnung von wasserlöslichem Rhodium und Phosphine und daneben noch Alkalimetall- und/oder Erdalkalimetall- und/oder Ammoniumionen enthaltenden Katalysatorsystemen, dadurch gekennzeichnet, dass man der wässrigen Lösung des Katalysatorsystems zunächst eine der vorhandenen Säuregruppen mindestens äquivalente Menge Säure zusetzt, darauf mit einem Amin, das in einem organischen Lösungsmittel gelöst ist, extrahiert, die abgetrennte organische Phase mit der wässrigen Lösung einer anorganischen Base in innige Berührung bringt und schliesslich die wässrige Phase abtrennt.

2. Verfahren nach Anspruch 1, dadurch gekennzeichnet, dass man die benötigte Säuremenge der wässrigen Lösung in Form eines Aminsalzes zusetzt.

3. Verfahren nach Anspruch 1 und 2, dadurch gekennzeichnet, dass das Amin ein offenkettiges, verzweigtes oder unverzweigtes aliphatisches Amin mit 10 bis 60, vorzugsweise 13 bis 36 Kohlenstoffatomen ist.

4. Verfahren nach Anspruch 3, dadurch gekennzeichnet, dass das Amin Isotridecylamin, Tri-n-octylamin oder Triisooctylamin ist.

5. Verfahren nach Anspruch 1 bis 4, dadurch gekennzeichnet, dass 0,1 bis 1,0 Mol Amin und insbesondere 0,25 bis 0,75 Mol Amin je Äquivalent Sulfonsäure eingesetzt werden.

6. Verfahren nach Anspruch 1 bis 5, dadurch gekennzeichnet, dass als Lösungsmittel für die Amine Toluol oder kerosinähnliche Fraktionen verwendet werden.

7. Verfahren nach Anspruch 1 bis 6, dadurch gekennzeichnet, dass die Extraktion in mehreren Schritten erfolgt.

8. Verfahren nach Anspruch 1 bis 7, dadurch gekennzeichnet, dass je Stufe 0,25 bis 0,5 Mol Amin je Äquivalent Sulfonsäure zugesetzt werden.

9. Verfahren nach Anspruch 1 bis 8, dadurch gekennzeichnet, dass als anorganische Base Natriumhydroxid oder Kaliumhydroxid verwendet wird.

10. Verfahren nach Anspruch 1 bis 9, dadurch gekennzeichnet, dass die Base bezogen auf vorhandenes Amin in stöchiometrischer Menge oder in geringem Überschuss verwendet wird.

11. Verfahren nach Anspruch 1 bis 10, dadurch gekennzeichnet, dass die Base als 0,1 bis 10 Gew.-%ige Lösung verwendet wird.

## Claims

1. A process for the recovery of catalyst systems containing water-soluble rhodium and phosphines together with alkali metal and/or alkaline earth metal and/or ammonium ions, characterised in that an amount of acid at least equivalent to the acid groups present is first added to the aqueous solution of the catalyst system, then extracted with an amine which is dissolved in an organic solvent, the separated organic phase is then intensively mixed with the aqueous solution of an inorganic base and finally the aqueous phase is separated.

2. A process according to claim 1, characterised in that the required amount of acid is added to the aqueous solution in the form of an amine salt.

3. A process according to claims 1 and 2, characterised in that the amine is an open-chain, branched or unbranched aliphatic amine with 10 to 60, preferably 13 to 36 carbon atoms.

4. A process according to claim 3, characterised in that the amine is isotridecylamine, tri-n-octylamine or triisooctylamine.

5. A process according to claims 1 to 4, characterised in that 0.1 to 1.0 mol amine and in particular 0.25 to 0.75 mol amine per equivalent of sulfonic acid are used.

6. A process according to claims 1 to 5, characterised in that toluene or fractions ressembling kerosine are used as a solvent for the amines.

7. A process according to claims 1 to 6, characterised in that extraction takes place in several steps.

8. A process according to claims 1 to 7, characterised in that in each step 0.25 to 0.5 mol amine are added per equivalent of sulfonic acid.

9. A process according to claims 1 to 8, characterised in that sodium hydroxide or potassium hydroxide is used as an inorganic base.

10. Process according to claims 1 to 9, characterised in that the base is used in stoichiometric amount or in slight excess related to the amine present.

11. A process according to claims 1 to 10, characterised in that the base is used as a 0.1 to 10 wt.% solution.

## Revendications

1. Procédé pour récupérer des systèmes catalyseurs contenant du rhodium à l'état soluble dans l'eau et des phosphines accompagnés d'ions de métaux alcalins et/ou alcalino-terreux et/ou d'ammonium, caractérisé en ce que l'on ajoute d'abord à la solution aqueuse du système catalyseur un acide en quantité au moins équivalent à celle des groupes acides présents, on extrait ensuite par une amine en solution dans un solvant organique, on met la phase organique séparée en contact intime avec une solution aqueuse d'une base minérale et, finalement, on sépare la phase aqueuse.

2. Procédé selon la revendication 1, caractérisé en ce que la quantité d'acide nécessaire est ajoutée à la solution aqueuse à l'état de sel d'amine.

3. Procédé selon les revendications 1 et 2, caractérisé en ce que l'amine utilisée est une amine aliphatique acyclique à chaîne droite ou ramifiée contenant de 10 à 60, de préférence de 13 à 36 atomes de carbone.

4. Procédé selon la revendication 3, caractérisé en ce que l'amine utilisée est l'isotridécylamine, la tri-n-octylamine ou la triisooctylamine.

5. Procédé selon les revendications 1 à 4, caractérisé en ce que l'on utilise de 0,1 à 1,0 mole d'amine, plus particulièrement 0,25 à 0,75 mole d'amine par équivalent d'acide sulfonique.

6. Procédé selon les revendications 1 à 5, caractérisé en ce que l'on utilise en tant que solvant pour les amines du toluène ou des fractions analogues au kérosène.

7. Procédé selon les revendications 1 à 6, caractérisé en ce que l'on effectue l'extraction en plusieurs stades opératoires.

8. Procédé selon les revendications 1 à 7, caractérisé en ce que l'on ajoute dans chaque stade opératoire de 0,25 à 0,5 mole d'amine par équivalent d'acide sulfonique.

9. Procédé selon les revendications 1 à 8, caractérisé en ce que l'on utilise en tant que base minérale l'hydroxyde de sodium ou l'hydroxyde de potassium.

10. Procédé selon les revendications 1 à 9, caractérisé en ce que la base est utilisée en quantité théorique ou en léger excès par rapport à l'amine présente.

11. Procédé selon les revendications 1 à 10, caractérisé en ce que l'on utilise la base à l'état de solution à une concentration de 0,1 à 10% en poids.